# EUROPEAN PATENT APPLICATION

(11) **EP 0 544 597 A1**
(43) Date of publication of application: **02.06.1993**
(21) Application number: 92403197.4
(22) Date of filing: 26.11.1992
(51) Int. Cl.: B60K 1/02

(54) **Electric motor driven car energized by on-board batteries**

(30) Priority: 28.11.1991 JP 314905/91
(71) Applicant: TOKYO R&D CO., LTD., Tokyo 106 (JP)
(72) Inventor: Ono, Masao, c/o Yokohama Lab. of Tokyo R & D Co., Yokohama-shi, Kanagawa-Prefecture 223 (JP)
(74) Representative: Joly, Jean-Jacques

(57) **Abstract**

The electric car is designed to drive at least one pair of wheels through a set of two motors 1, 1' arranged laterally on or near the centerline (P-P') of the car in parallel position. A power shaft 1a of one of the motors 1 and another power shaft 1b of the other of the motors 1' extend parallel but in opposite directions and are coupled respectively to corresponding reduction gear devices 2a, 2b, which in turn drive two drive axles (wheel shafts) 4a, 4b on either side to energize the corresponding wheels 3 or 13. The two drive shafts are connected to the reduction gear devices along a common axis.

Since no heavy and inefficient differential gear device is included, an enhanced power efficiency can be expected. By controlling the two motors 1, 1' which drive the wheels on either side independently, maneuvrability is enhanced.

As the two motors are mounted in parallel, the space between the two driven wheels can be used much more effectively. In particular, the motors can be of a type having a small diameter and a large axial length, such motors being highly efficient. The motors can be of low-torque and high-revolution type and for high motor efficiency.

## Description

### Background of the Invention

The present invention relates to an electric car which is driven by motors having their electric source in storage batteries mounted on the car itself.

The purpose of the invention is to provide an electric car that offers high power, excellent roadholding and maneuvrability, high motor efficiency by the adoption of low-torque, high speed type motors and a comfortable ride. The invention also provides the possibility of obtaining high functional and structural integration at the level of the motor case.

Conventional electric cars of the most primitive types are merely standard electric motors in place of a gasoline engine, and hence have a propeller shaft and a differential gear device. Such electric cars are poor in power efficiency, transmission efficiency and space efficiency due to the inclusion of a heavy differential gear device and a propeller shaft.

Another type of electric car which has been in practical use has a structure wherein the power shafts of a pair of electric motors to drive the two wheels of the car are arranged in line, and a reduction device using planet gears is combined therewith. ln this case, neither a propeller shaft nor a differential gear device is used. However, in an electric car of this type having a pair of electric motors arranged in a serial position (i.e. in-line) on the same axis, the length of the motors in the direction of the axis is severely limited by the space available between the wheels, and hence the motors must be of a type having a small length, and consequently a large diameter. As is well known, however, only the part of the armature coil that is adjacent to the magnet (effective part) is useful in power generation and contributes to performance - the part turned radially is reactive. Thus, the efficiency of such motors having a large diameter and short axial length is inevitably low.

There has also been a direct-drive type electric car in practical use which employs four motor-integrating wheels (wheel-motors), each wheel having an electric motor incorporated therein. ln this type of electric car employing wheel motors, however, motors of low torque and high revolution cannot be used to enhance motor efficiency because of severe restrictions on the shape and size of the motors inside the wheels. Further, the wheel motors are extremely heavy in comparison with ordinary wheels, and the so-called heavy under-suspension-weight due to this results in unsatisfactory drivability, roadholding and comfort.

### Summary of the Invention

The electric car according to the invention is of the type driven by electric motors running off on-board batteries, said motors comprising a set of two motors which are relatively long in the axial direction and arranged laterally on or near the center-line of the car in a parallel position. The two motors of the set have power shafts extending in the opposite directions, and are coupled with respective reduction devices through engagement with gears so that the two driving axles (wheel shafts) are arranged on the same axis, that is, aligned with each other.

In one embodiment, the casing of the set of motors is formed as common integral structure from a light metal material such as aluminum, and a pivot bracket of the suspension is formed directly on the motor case or as an integral part of a side cover connected to the motor case. Also, the motor case of the set of two motors may optionally have a steering gear box affixed to it as an integral part or as a separate structure. The motor case can be attached to the frame of the car through a rubber mount.

The set of two motors is mounted either for front wheel drive or for rear wheel drive in the case of a two-wheel-drive car. Respective sets of motor pairs may also be provided for the front and rear wheels in the case of a four-wheel-drive car.

According to the invention, since the two wheels of a wheel pair are driven directly by a set of two motors, neither a propeller shaft nor a differential gear device that are heavy and inefficient are necessary, and further, drivability can be enhanced by controlling the two motors independently.

Suitable motors for the invention are those that are relatively small in diameter and long in the axial direction. Such a configuration enhances motor efficiency and makes it possible to use low-torque and high-revolution type designs. The body itself can be an ordinary light-weight type and thus the so-called under-suspension-weight can be kept small. Further, in the embodiment putting together the suspension bracket and the steering gear box into a motor case as an integral assembly, integration and weight reduction of the structure are further achieved.

### Brief Description of the Drawings

For better understanding of the invention and its embodiments, which are given purely as an example, reference will be made in the following to the accompanying drawings, in which:
Figure 1 is a simplified plan view of an electric car in accordance with the present invention;
Figure 2 is a simplified side elevational view of an electric car in accordance with the present invention;
Figure 3 is a plan view showing the details of motors for the front wheels in accordance with the present invention, with a portion removed to reveal internal features;
Figure 4 is a side elevational view showing the details of the motors of the front wheels in accordance with the present invention; and
Figure 5 is an enlarged view of a part where motors are attached to the frame of the car in accordance with the present invention.

In the figures, like numbers designate the same corresponding part.

### Detailed Description of the Invention

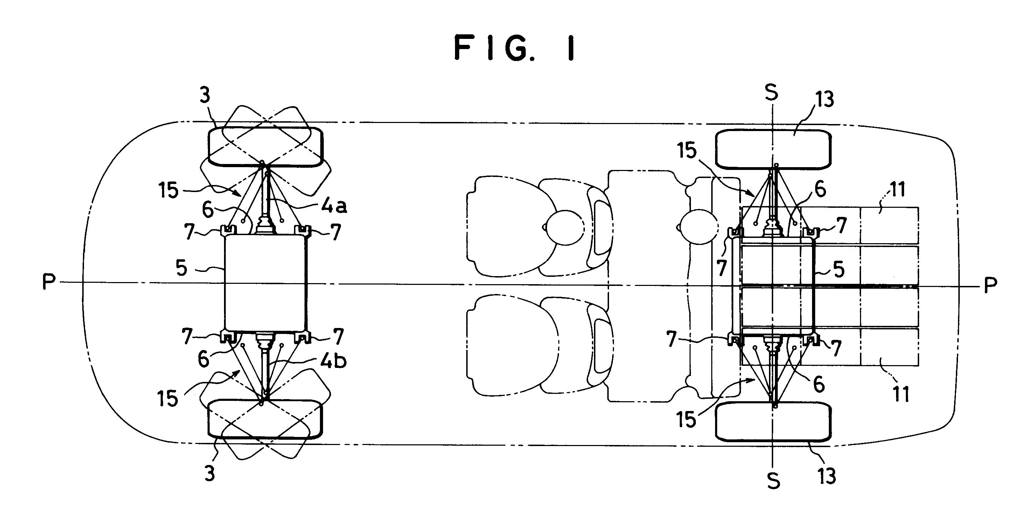

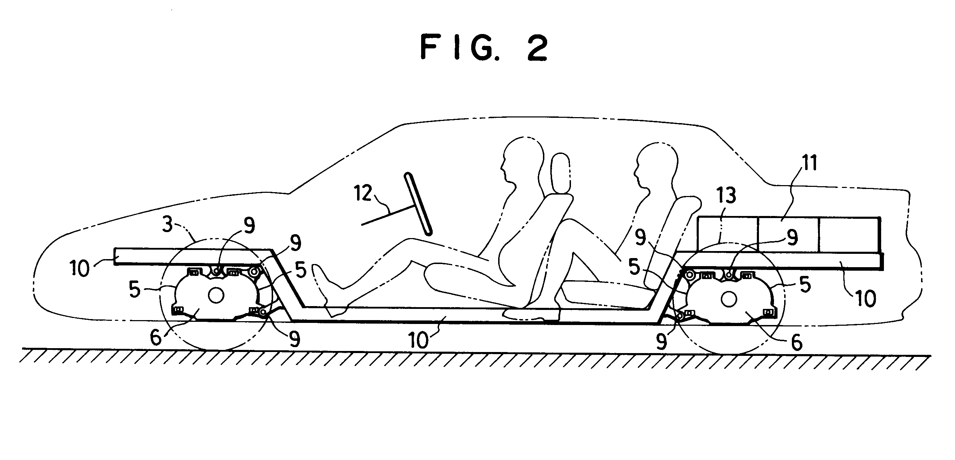

The electric car shown in Figures 1 and 2 is a four-wheel-drive vehicle in which both the front wheels 3 and the rear wheels 13 are driven by a respective set of two motors. The invention can be of course embodied as a two-wheel-drive car in which either front or rear wheels are driven by a set of two motors. Batteries 11 that serve as electric source are mounted on the rear part of the frame 10.

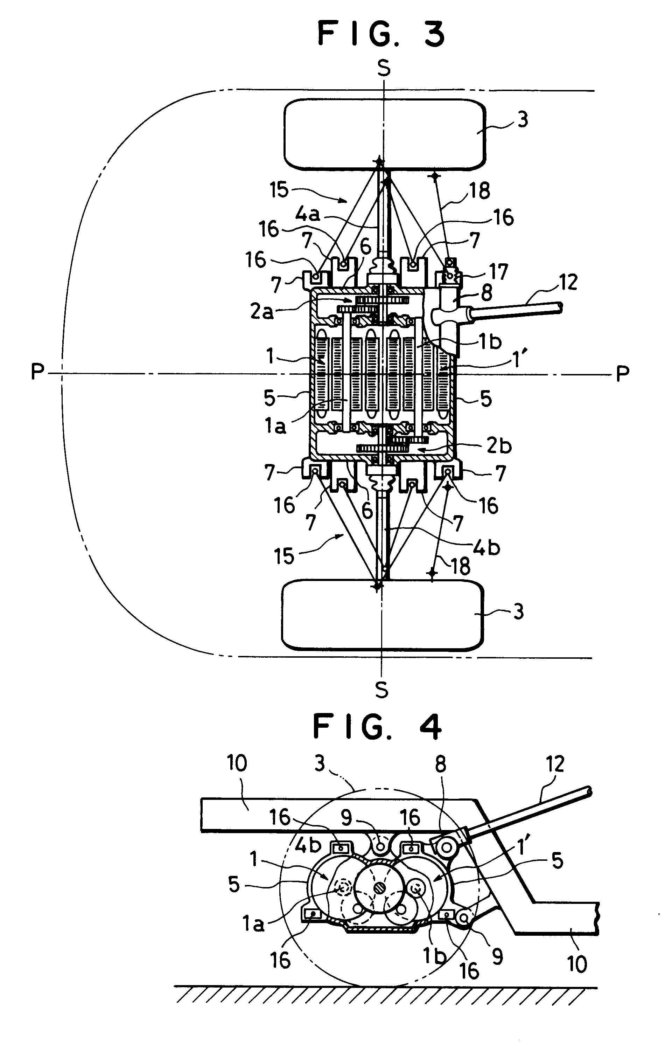

The details of the motors portion are shown in Figures 3 and 4. To drive two wheels 3, 3 (or 13, 13) on either side independently, the pair of motors constituting a motor set is positioned on the center line P-P of the car (a position near it may be also admissible) and laterally (i.e. perpendicular to said center line). Each motor 1, 1' of the pair has a relatively small diameter and a relatively larger axial length. They are arranged in parallel position as close to one another as possible. Power shafts 1a and 1b of the motors 1, 1' extend parallel to one another but in the opposite directions, one power shaft 1a being coupled to a corresponding reduction gear device 2a, while the other power shaft 1b is coupled to another reduction gear device 2b, through respective gear engagement. The reduction gear devices shown in Figure 3 are for 2-stage reduction, but can be adapted for one-stage reduction or more than two reduction stages. The drive axle (wheel shaft) 4a which connects the driving end of one of the reduction gear devices 2a to the corresponding wheel 3 (or 13) and the drive axle (wheel shaft) 4b which connects the driving end of the other reduction gear device 2b are arranged on the same axis S-S (Figure 3).

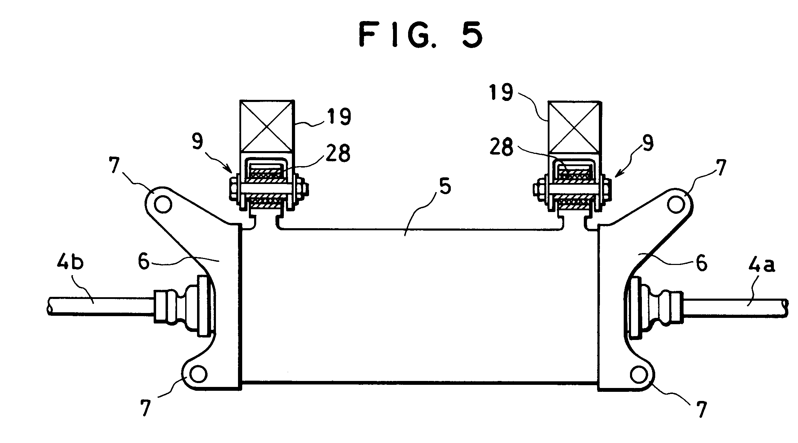

The motor case 5 of the set of two motors 1, 1' is formed from a light metal material such a aluminum and forms an integral structure that serves both as a case for the set of motors and as a case for the reduction gear devices 2a, 2b. A side cover 6 formed directly on the motor case 5 as an integral part thereof (or a side cover formed as a separate body and fixed to the motor case) has a pivot bracket 7 for the suspension 15 formed to be integral therewith. The pivot itself is designated by reference numeral 16 in Figure 4. Similarly, a steering box 8 is also formed on the motor case 5 as an integral part thereof. This steering box 8 can, however, be made as a separate structure and fixed to the motor case. To the steering box is connected a steering shaft 12. A slider 17, which moves laterally in response to the rotation angle of the steering shaft 12 in the steering box 8, and the steered wheels (front wheels 3) are connected by steering arms 18. As described above, the motor case 5, the side cover 6, the pivot bracket 7 and the steering box 8 are combined to form a single structure, thereby simplifying the structure and reducing weight. The motor case 5 is attached to the underside of the frame 10 of the car through a rubber mount 9 as shown in Figure 5. Numeral 28 in Figure 5 designates a rubber bush, and numeral 19 designates a bracket of the frame 10. The rubber bush 28 prevents vibrations induced by the driving system (motors) and by the road surface from being transmitted to the body of the car. As shown in Figure 2, the frame 10 of the electric car is formed to be as low as possible between the front wheels 3 and the rear wheels 13 to provide comfortable space for passengers and to maintain running stability. An array of storage batteries 11 is mounted on the frame 10 that extends behind the rear wheels.

## Claims

1. An electric car driven by motors which have their electric source in on-board storage batteries (11), characterized in that it comprises :
a set of two motors (1, 1') arranged laterally on or near the center line (P-P')of the car, the two motors being parallel to each other, the power shaft (1a) of one of said motors (1) and the power shaft (1b) of the other of said motors (1') extending parallel to each other, but in opposite directions and coupled respectively to corresponding reduction gear devices through gear engagement (2a, 2b), and
two drive axles (4a, 4b) on which connect said reduction gear devices to the corresponding wheels (3; 13)and which are arranged on a common axis (S-S').

2. The electric car of claim 1 wherein said set of two motors (1, 1') has a common motor case (5) formed as an integral structure from a light metal material and a pivot bracket (7) of the suspension (15) is formed either directly on said motor case or as an integral part of a side cover (6) attached to said motor case (5).

3. The electric car of claims 1 or 2, wherein a steering gear box (8) is attached to said motor case (5) as an integral part thereof or as a separate structure.

4. The electric car of claims 1, 2 or 3, wherein said motor case (5) is attached to the frame of the car through a rubber mount (9).

5. The electric car according to any one of claims 1 to 4, wherein one set of two motors is provided for either the front wheels (3) or for the rear wheels (13) or wherein two sets of motors (1, 1') are provided to drive both the front wheels and the rear wheels.
